# NEUE EUROPÄISCHE PATENTSCHRIFT

(11) **EP 2 743 662 B2**
(45) Veröffentlichungstag und Bekanntmachung des Hinweises auf die Entscheidung über den Einspruch: **13.09.2023**
(45) Hinweis auf die Patenterteilung: 17.05.2017
(21) Anmeldenummer: 13197053.5
(22) Anmeldetag: 13.12.2013
(51) Int. Cl.: G01L 3/10, G01D 5/04, G01L 5/22, B62D 15/02

(54) **Vorrichtung mit einer Drehmomentsensoreinrichtung und optional einer Lenkwinkelsensoreinrichtung für ein Kraftfahrzeug, und Verfahren zum Herstellen einer Drehmomentsensoreinrichtung**
Device with a torque sensor device and optionally a steering angle sensor apparatus for a motor vehicle, and method for producing a torque sensor device
Dispositif comprenant une installation de capteurs de couple et en option une installation de capteurs d'angle de direction pour un véhicule automobile, et procédé de fabrication d'une installation de capteurs de couple

(30) Priorität: 13.12.2012 DE 102012024382
(43) Veröffentlichungstag der Anmeldung: 18.06.2014
(73) Patentinhaber: Valeo Schalter und Sensoren GmbH, 74321 Bietigheim-Bissingen (DE)
(72) Erfinder: Schoepe, Roman, 74321 Bietigheim-Bissingen (DE); Thom, Jens, 71034 Böblingen (DE); Froehlich, Ekkehart, 74226 Nordheim (DE); Rachui, Dirk, 74321 Bietigheim-Bissingen (DE); Hadobas-Roessel, Katalin, 74321 Bietigheim-Bissingen (DE)

(56) Entgegenhaltungen:
- EP-A2- 2 664 906
- WO-A1-2012/025683
- US-A1- 2010 194 385
- Didier Angleviel ET AL: "Development of a Contactless Hall effect torque sensor for Electric Power Steering", SAE 2006 World Congress & Exhibition, 3. April 2006 (2006-04-03), XP055105600, DOI: 10.4271/2006-01-0939 Gefunden im Internet: URL:http://www.movingmagnet.com/medias/dow nload/2006-01-0939.pdf [gefunden am 2014-03-05]

## Beschreibung

Die Erfindung betrifft eine Vorrichtung für ein Kraftfahrzeug, welche eine Drehmomentsensoreinrichtung zur Erfassung eines auf einer Lenkwelle des Kraftfahrzeugs aufgebrachten Drehmoments aufweist. Die Drehmomentsensoreinrichtung umfasst einen magnetischen Stator, der zum Leiten von magnetischem Fluss von einem Magneten hin zu zumindest einem Flussleiter und hierdurch zu zumindest einem Magnetsensor ausgebildet ist. Die Erfindung betrifft außerdem ein Kraftfahrzeug mit einer solchen Vorrichtung sowie ein Verfahren zum Herstellen einer Drehmomentsensoreinrichtung für ein Kraftfahrzeug.

Drehmomentsensoreinrichtungen zur Erfassung eines auf eine Lenkwelle eines Kraftfahrzeugs aufgebrachten Drehmoments sind bereits Stand der Technik. Solche Drehmomentsensoreinrichtungen können beispielsweise bei elektrischen Lenksystemen eingesetzt werden. Eine Drehmomentsensoreinrichtung ist zum Beispiel aus dem Dokument US 2004/0194560 A1 sowie aus der Druckschrift DE 102 40 049 A1 bekannt. Die Drehmomentsensoreinrichtung ist dabei an zwei sich in axialer Richtung gegenüberliegenden Wellenteilen bzw. Teilwellen der Lenkwelle angebracht, welche über einen Torsionsstab miteinander verbunden sind. An dem ersten Wellenteil ist ein Magnet - etwa ein Ringmagnet - angeordnet, während auf dem anderen Wellenteil ein Halter mit einem magnetischen Stator angebracht ist, welcher dem Dauermagneten in radialer Richtung über einen kleinen Luftspalt gegenüberliegt. Über den Stator - welcher üblicherweise aus zwei separaten Statorteilen besteht - wird der magnetische Fluss des Magneten hin zu einem ersten und einem zweiten Flussleiter geleitet, welche dann den magnetischen Fluss an einen Magnetsensor - beispielsweise einen Hall-Sensor - abgeben. Der Magnetsensor befindet sich dabei zwischen den beiden Flussleitern, wie dies beispielsweise in den Fig. 7 und 8 des Dokuments US 2004/0194560 A1 gut erkennbar ist.

Eine solche Drehmomentsensoreinrichtung ist außerdem aus dem Dokument DE 10 2007 043 502 A1 bekannt.

Außerdem sind aus dem Stand der Technik auch Lenkwinkelsensoreinrichtungen bekannt, welche zur Erfassung des aktuellen Lenkwinkels der Lenkwelle dienen. Eine solche Einrichtung ist zum Beispiel aus dem Dokument DE 10 2008 011 448 A1 als bekannt zu entnehmen. Eine Drehbewegung der Lenkwelle wird hier über ein Getriebe auf ein kleineres Zahnrad übertragen, welches einen Magneten trägt. Die Rotation des kleineren Zahnrades wird dann mithilfe eines Magnetsensors erfasst.

Zum Stand der Technik gehören auch solche Vorrichtungen, bei denen die Drehmomentsensoreinrichtung einerseits sowie die Lenkwinkelsensoreinrichtung andererseits integral als eine gemeinsame Baueinheit ausgebildet sind. Eine solche Vorrichtung mit einem Drehmomentsensor und einem Drehwinkelsensor ist beispielsweise aus dem Dokument DE 10 2010 033 769 A1 bekannt.

Des Weiteren ist aus dem Stand der Technik bekannt, dass Magnetsensoren auf einer Leiterplatte montiert werden können. Das Dokument WO 2012/025683 A1 beschreibt die Verwendung dieser Technologie zur Postionsbestimmung einer Drehachse unter Verwendung zweier Magnetsensoren.

Das Dokument "Development of a contactless hall effect torque sensor for electric power steering" (Didier Angleviel ET AL, SAE 2006 World Congress & Exhibition, 3. April 2006) offenbart die generelle Verwendung eines Magnetsensors in SMD-Technologie auf einer Leiterplatte für eine Drehmomentsensoreinrichtung.

In der US 2010/0194385 A1 wird eine weitere zum Stand der Technik gehörende Anordnung für einen Drehmomentsensor offenbart. Hier wird ein Magnetsensor in Form eines THT-Bauelements an einer Leiterplatte befestigt. Zur Kontaktierung des Magnetsensors ist eine Aussparung in der Leiterplatte vorgesehen, in die der Magnetsensor hineinragt. Dazu ist der als THT-Bauelement ausgeführte Magnetsensor wie ein Kragarm als diskretes Bauelement an der Leiterplatte befestigt.

Aus der US 2011/0221432 A1 ist eine weitere Drehmomentsensorvorrichtung aus dem Stand der Technik bekannt, welche einen Magnetsensor auf einer Leiterplatte zur Erfassung eines drehmomentabhängigen Magnetfeldes aufweist.

Bei den Drehmomentsensoreinrichtungen, wie sie aus dem Stand der Technik (beispielsweise aus dem Dokument US 2010/0194385 A1) bekannt sind, besteht eine große Herausforderung darin, Maßnahmen zu treffen, die eine einfachere Montage der gesamten Vorrichtung gewährleisten. Eine weitere Herausforderung besteht darin, die Bauhöhe bzw. Ausdehnung der Vorrichtung in axialer Richtung zu minimieren, ohne dabei den guten und gleichmäßigen magnetischen Fluss von den beiden Flussleitern hin zum Magnetsensor negativ zu beeinflussen. Während bei den Lenkwinkelsensoreinrichtungen im Stand der Technik typischerweise SMD-Bauelemente als Magnetsensoren eingesetzt werden, muss bei Drehmomentsensoreinrichtungen im Stand der Technik ein THT-Bauelement als Magnetsensor eingesetzt werden, welches über elektrisch leitfähige Drähte an die Leiterplatte elektrisch angebunden wird. Der Einsatz von THT-Bauelementen ist dabei dadurch bedingt, dass der Magnetsensor selbst in einen Schacht zwischen zwei benachbarten Flussleitern eingeführt werden muss, um die Übertragung des magnetischen Flusses von dem Flussleiter an den Magnetsensor überhaupt ermöglichen zu können. Der Einsatz eines solchen THT-Bauelements bei einer kombinierten Drehmoment- und Lenkwinkelsensoreinrichtung führt jedoch in fertigungstechnischer Hinsicht dazu, dass der Magnetsensor der Drehmomentsensorik bedrahtet und separat gelötet werden muss, während die Leiterplatte mit den Bauelementen der Lenkwinkelsensorik ohne viel Aufwand SMD-bestückt werden kann. Eine solche Kombination unterschiedlicher Typen von Bauelementen erhöht insgesamt den Fertigungsaufwand.

Es ist Aufgabe der Erfindung, eine Lösung aufzuzeigen, wie bei einer Vorrichtung der eingangs genannten Gattung der Fertigungsaufwand im Vergleich zum Stand der Technik reduziert werden kann.

Diese Aufgabe wird erfindungsgemäß durch eine Vorrichtung mit den Merkmalen gemäß dem unabhängigen Patentanspruch gelöst. Vorteilhafte Ausführungen der Erfindung sind Gegenstand der abhängigen Patentansprüche, der Beschreibung und der Figuren.

Eine erfindungsgemäße Vorrichtung für ein Kraftfahrzeug umfasst eine Drehmomentsensoreinrichtung, welche zur Erfassung eines auf eine Lenkwelle des Kraftfahrzeugs aufgebrachten Drehmoments ausgebildet ist und einen magnetischen Stator aufweist, der beispielsweise aus einem weichmagnetischen Material ausgebildet ist. Der Stator ist zum Leiten von magnetischem Fluss von einem Magneten hin zu zumindest einem Flussleiter und über den Flussleiter zu zumindest einem Magnetsensor ausgebildet. Der Magnet kann beispielsweise mit einem ersten Wellenteil der Lenkwelle verbunden werden, während der Stator an einem Halter angeordnet und mit diesem drehfest verbunden werden kann, der mit einem zweiten Wellenteil der Lenkwelle verbunden werden kann. Die beiden Wellenteile können insbesondere über einen Torsionsstab miteinander gekoppelt sein. Optional kann für den Halter ein Gleitstück eingesetzt werden, welches zum Tragen des zumindest einen Flussleiters ausgebildet ist, wobei dann der Halter relativ zum Gleitstück drehbar angeordnet ist. Der zumindest eine Magnetsensor ist erfindungsgemäß als SMD-Bauelement (Surface-Mounted Device) ausgebildet, welches an einer Leiterplatte angeordnet ist. Der zumindest eine Flussleiter weist eine Lasche auf, die in gegenseitiger Überlappung mit dem Magnetsensor angeordnet ist.

Während im Stand der Technik aufgrund der Ausgestaltung des Flussleiters der Magnetsensor als THT-Bauelement (Through Hole Technology) ausgeführt werden muss, wird erfindungsgemäß vorgeschlagen, den Magnetsensor als SMD-Bauelement auszubilden und den Flussleiter derart auszugestalten, dass er eine, insbesondere sich in radialer Richtung erstreckende, Lasche aufweist, die in gegenseitiger Überlappung bzw. Überdeckung mit dem an der Leiterplatte anliegenden Magnetsensor angeordnet ist. Dadurch entfällt die Bestückung und Lötung von bedrahteten Bauelementen mit den damit verbundenen Nachteilen. Alle Bauelemente können als SMD-Bauelemente auf der Leiterplatte in einem gemeinsamen Fertigungsschritt montiert werden, so dass sich insgesamt der Fertigungsaufwand im Vergleich zum Stand der Technik deutlich reduziert. Weil SMD-Bauelemente auch besonders flach ausgeführt werden können, kann die Größe der Vorrichtung in Richtung senkrecht zur Leiterplatte im Vergleich zum Stand der Technik reduziert werden. Insbesondere ergibt sich somit eine im Vergleich zum Stand der Technik reduzierte Ausdehnung bzw. Bauhöhe der Vorrichtung, insbesondere in axialer Richtung, wenn die Leiterplatte senkrecht zur axialen Richtung angeordnet ist. Dazu trägt auch die Tatsache bei, dass durch den Wegfall der Drähte des Magnetsensors die Leiterplatte selbst zwischen zwei Statorteilen des Stators angeordnet werden kann, welche in axialer Richtung verteilt bzw. beabstandet zueinander angeordnet sind.

Um die axiale Bauhöhe zu reduzieren, ist erfindungsgemäss vorgesehen, dass die Lasche des Flussleiters eine axiale oder eine radiale bzw. in radialer Richtung weisende Lasche ist, die in gegenseitiger axialer Überlappung mit dem Magnetsensor angeordnet ist.

Die Lasche kann also eine radiale Lasche sein, die in radialer Richtung zeigt. Alternativ kann jedoch auch vorgesehen sein, dass die Lasche im Wesentlichen in axialer Richtung weist und somit axial orientiert ist, ohne dass sie einen speziellen radialen Abschnitt aufweist. Auch hier ist dann eine gegenseitige Überlappung zwischen der Lasche und dem Magnetsensor gegeben, nämlich insbesondere in axialer Richtung oder alternativ in radialer Richtung, abhängig von der Orientierung der Leiterplatte.

Bevorzugt weist der zumindest eine Flussleiter einen in gegenseitiger axialer Überlappung mit dem Stator angeordneten, plattenförmigen Empfangsbereich zum Empfangen des magnetischen Flusses von dem Stator auf. Dann kann die sich parallel zum Empfangsbereich erstreckende Lasche in axialer Richtung versetzt zum Empfangsbereich angeordnet sein. Dies bedeutet, dass die radiale Lasche des Flussleiters über einen Steg bzw. ein Brückenelement mit dem Empfangsbereich verbunden ist, wobei der Steg gewinkelt, insbesondere senkrecht, sowohl zum Empfangsbereich als auch zur Lasche angeordnet ist. Der Flussleiter ist dabei vorzugsweise insgesamt einstückig ausgebildet, so dass der Empfangsbereich einerseits sowie der Steg und die radiale Lasche andererseits einstückig miteinander ausgebildet sind. Dadurch, dass die radiale Lasche in axialer Richtung versetzt zum Empfangsbereich des Flussleiters angeordnet ist, kann einerseits der Empfangsbereich in einem sehr geringen Abstand zum Stator und andererseits die Lasche in einem sehr geringen Abstand zum Magnetsensor angeordnet werden, so dass eine zuverlässige Übertragung des magnetischen Flusses vom Stator hin zum Magnetsensor gewährleistet ist. Die Leiterplatte mit dem Magnetsensor kann auch axial zwischen den beiden Statorteilen liegen.

Der zumindest eine Flussleiter kann dabei - ähnlich wie der Stator - aus einem magnetischen, z.B. weichmagnetischen, Material gebildet sein.

Erfindungsgemäss ist vorgesehen, dass die Vorrichtung zwei Flussleiter mit jeweils zumindest einer genannten Lasche aufweist, die auf einander gegenüberliegenden Seiten der Leiterplatte angeordnet sind, wobei die jeweiligen Laschen in gegenseitiger, insbesondere axialer, Überlappung mit dem Magnetsensor angeordnet sind. Somit ist der Magnetsensor quasi als Sandwich-Element zwischen der Lasche des einen Flussleiters einerseits und der Lasche des anderen Flussleiters andererseits angeordnet und überlappt die beiden Laschen insbesondere in axialer Richtung. Somit kann die Übertragung des magnetischen Flusses über zwei separate Statorteile sowie zwei separate Flussleiter hin zu dem Magnetsensor ermöglicht werden, so dass auch eine zuverlässige Erfassung des Drehmoments gewährleistet ist.

Um eine wirkungsvolle Flussübertragung auf den Magnetsensor von demjenigen Flussleiter zu ermöglichen, der sich auf der Rückseite der Leiterplatte befindet, weist die Leiterplatte erfindungsgemäss eine unter dem Magnetsensor ausgebildete Aussparung für die Lasche des Flussleiters auf. Die Aussparung ist bevorzugt ein Durchgangsloch in der Leiterplatte. Die Lasche dieses Flussleiters erstreckt sich dann in die Aussparung der Leiterplatte, insbesondere axial, hinein. Auf diese Art und Weise kann der axiale Abstand zwischen dem Magnetsensor bzw. seiner Rückseite einerseits und der Lasche des Flussleiters andererseits minimiert und die Übertragungswirkung optimiert werden. Außerdem verringert sich somit zusätzlich noch die axiale Bauhöhe der Vorrichtung.

Erfindungsgemäss ist des Weiteren vorgesehen, dass der zumindest eine Magnetsensor an mindestens zwei gegenüberliegenden Randabschnitten, der unter dem Magnetsensor ausgebildeten Aussparung, direkt auf einer Seite der Leiterplatte durch an zwei gegenüberliegenden Seiten des Magnetsensors angeordnete lötfähige Anschlussflächen gelötet ist.

Der magnetische Fluss kann also mit insgesamt zwei Flussleitern an Randelementen des Stators abgegriffen und über die jeweiligen schmalen Laschen zum Magnetsensor geleitet und dort konzentriert werden. Die Laschen reichen dabei bevorzugt bis dicht an die Ober- und Unterseite des Magnetsensors heran, um einen sehr engen Luftspalt zu erhalten. Dazu kann in der Leiterplatte unterhalb des Magnetsensors die genannte Aussparung vorgesehen sein, welche vorzugsweise als Durchgangsöffnung in der Leiterplatte ausgebildet ist.

Die Drehmomentsensoreinrichtung kann auch zwei als SMD-Bauelemente ausgebildete Magnetsensoren jeweils zum Erfassen des magnetischen Flusses aufweisen, und der zumindest eine Flussleiter kann zwei, insbesondere in einer gemeinsamen radialen Ebene angeordnete, vorzugsweise radiale, Laschen aufweisen, die jeweils in gegenseitiger, insbesondere axialer, Überlappung mit einem der Magnetsensoren angeordnet sind. Durch Vorsehen von zwei separaten Magnetsensoren sowie zwei Laschen zum Leiten des magnetischen Flusses zu den jeweiligen Magnetsensoren kann eine redundante Erfassung des magnetischen Flusses und somit eine redundante Bestimmung des Drehmoments an der Lenkwelle ermöglicht werden, so dass Fehler bei der Bestimmung des Drehmoments aufgrund der gegebenen Redundanz ausgeschlossen werden können.

Zumindest ein Magnetsensor der Drehmomentsensoreinrichtung kann als dualer Sensor mit zwei integrierten Sensorelementen ausgebildet sein, welche in das SMD-Bauelement integriert sind und den magnetischen Fluss separat erfassen können. Mit einem solchen dualen Magnetsensor kann eine zusätzliche Redundanz im Hinblick auf die Erfassung des Drehmoments ermöglicht werden und/oder die Drehmomentsensoreinrichtung kann mit lediglich einem einzigen Magnetsensor auskommen, welcher zwei integrierte Sensorelemente beinhaltet.

Sind insgesamt zwei separate Magnetsensoren als separate SMD-Bauelemente vorgesehen, so kann zumindest einer dieser Magnetsensoren als dualer Sensor mit zwei Sensorelementen ausgebildet sein. Optional können sogar beide Magnetsensoren als duale Sensoren ausgebildet sein.

Umfasst die Drehmomentsensoreinrichtung ausschließlich einen Magnetsensor, so kann dieser als dualer Sensor mit zwei Sensorelementen zur separaten Erfassung des magnetischen Flusses ausgebildet sein.

Vorzugsweise entspricht die Anzahl der eingesetzten Magnetsensoren der Anzahl der Laschen, welche bei einem einzelnen Flussleiter eingesetzt werden. Jedem Magnetsensor ist somit jeweils eine Lasche des zumindest einen Flussleiters zugeordnet.

Bevorzugt weist der Stator zwei in axialer Richtung beabstandet angeordnete Statorteile auf, welche jeweils zum Leiten des magnetischen Flusses von dem Magneten hin zu einem Flussleiter und hierdurch zu dem mindestens einen Magnetsensor dienen. Bei dieser Ausführungsform kann die Leiterplatte axial zwischen den beiden Statorteilen angeordnet sein. Somit wird die axiale Bauhöhe der Vorrichtung im Vergleich zu Ausführungsformen reduziert, bei denen die Leiterplatte mit den daran angebrachten Bauelementen axial neben dem Stator bzw. axial versetzt zum Stator angeordnet ist.

Vorzugsweise weisen die beiden Statorteile jeweils ein sich in radialer Richtung erstreckendes bzw. radial nach außen hin weisendes, ringförmiges und flanschartiges sowie einen axialen Rand des jeweiligen Statorteils bildendes Randelement auf, von welchem eine Vielzahl von Zahnelementen in axialer Richtung abstehen. Die Zahnelemente des einen Statorteils sind dann mit den Zähnen des anderen Statorteils abwechselnd in Umfangsrichtung verteilt angeordnet, so dass die Zähne des einen Statorteils sich in jeweilige Zwischenräume zwischen den Zähnen des anderen Statorteils hinein erstrecken. Die jeweiligen flanschartigen Randelemente überlappen sich dabei vorzugsweise gegenseitig in axialer Richtung. Die ringförmigen Randelemente dienen dabei zum Übertragen des magnetischen Flusses an den jeweiligen Flussleiter. Der plattenförmige Empfangsbereich des Flussleiters wird hierzu bevorzugt in einem sehr geringen Abstand zum flanschartigen Randelement des Statorteils angeordnet. Vorzugsweise ist der zumindest eine Magnetsensor axial mittig zwischen den beiden Statorteilen bzw. mittig zwischen den jeweiligen Randelementen angeordnet. Dies bedeutet, dass der zumindest eine Magnetsensor im gleichen axialen Abstand von den beiden Randelementen liegt. Durch eine solche symmetrische Anordnung des Magnetsensors in axialer Richtung wird erreicht, dass auf beiden Seiten der Leiterplatte der magnetische Fluss über die gleiche Weglänge geleitet wird, so dass es sich an der jeweiligen Lasche der beiderseitigen Flussleiter auch die gleiche Flussdichte ergeben soll.

Zusätzlich zu der Drehmomentsensoreinrichtung kann die Vorrichtung weiterhin auch eine Lenkwinkelsensoreinrichtung aufweisen, welche zur Erfassung eines Lenkwinkels der Lenkwelle ausgebildet ist. Die Lenkwinkelsensoreinrichtung kann einen Rotor mit einer, insbesondere umlaufend ausgebildeten, Zahnstruktur und zumindest ein Zahnrad mit einem Magneten aufweisen. Das Zahnrad kann in Eingriff mit der Zahnstruktur des Rotors gebracht werden, so dass eine Drehbewegung des Rotors und somit der Lenkwelle in eine Drehbewegung des Magneten übertragen wird. Die Lenkwinkelsensoreinrichtung kann auch einen Magnetfelddetektor aufweisen, der zur Erfassung der Richtung eines Magnetfeldes des Magneten und somit zur Erfassung der Drehbewegung ausgebildet und an der Leiterplatte angeordnet ist. Somit ist die Vorrichtung eine multifunktionale Vorrichtung, welche einerseits zur Erfassung des Drehmoments und andererseits auch zur Erfassung des Lenkwinkels ausgebildet ist. Die Drehmomentsensoreinrichtung ist mit der Lenkwinkelsensoreinrichtung integral als eine Einheit ausgebildet.

Ist der Magnetsensor der Drehmomentsensoreinrichtung mittig zwischen den beiden Statorteilen angeordnet, so ergibt sich eine in axialer Richtung außermittige Anordnung des Magneten des Zahnrads zwischen den jeweiligen Randelementen der Statorteile. Der Magnet des Zahnrads kann dabei so ausgebildet sein bzw. derart oberflächenmagnetisiert werden, dass das Magnetfeld auf axialer Höhe der beiden Randelemente gleich groß ist und sich somit gegenseitig aufhebt. Dies bedeutet, dass an den jeweiligen Randelementen der Statorteile jeweils ein Magnetfeld gleicher Feldstärke durch den Magneten des Zahnrads bereitgestellt wird. Somit wird eine Beeinflussung des magnetischen Flusses verhindert, der über den Stator und den zumindest einen Flussleiter geleitet wird.

Gemäß einer alternativen Ausführungsform kann der Magnet des Zahnrads axial mittig zwischen den beiden Statorteilen bzw. den jeweiligen Randelementen angeordnet sein, so dass der Magnetsensor der Drehmomentsensoreinrichtung und der Magnetfelddetektor der Lenkwinkelsensoreinrichtung axial außermittig liegen. Bei dieser Ausführungsform werden die beiden Flussleiter bevorzugt asymmetrisch bezüglich einer Mittelebene zwischen den beiderseitigen Randelementen der Statorteile angeordnet. Der eine Flussleiter kann vollständig axial innerhalb des Stators und somit axial zwischen den Randelementen liegen, während der andere Flussleiter zumindest mit seinem Empfangsbereich axial außerhalb des Stators bzw. axial versetzt dazu angeordnet sein kann. Die Anordnung des Zahnrads in der axialen Mitte zwischen den Randelementen hat den Vorteil, dass auch bei einem "normalen" Permanentmagneten ohne eine spezielle Oberflächenmagnetisierung die Feldstärke des Magnetfelds an den beiden Randelementen gleich ist und es somit zu keinem oder nur einem geringen Übersprechen zwischen den beiden Sensorarten kommt.

Optional kann auch eine Abschirmung für Magnetfelder axial zwischen dem Permanentmagneten des Zahnrads einerseits und zumindest einem der Randelemente andererseits angeordnet sein. Eine solche Abschirmung kann insbesondere in Form eines Abschirmungsblechs bereitgestellt werden, das sich parallel zur Leiterplatte erstreckt. Die Abschirmung hat den Vorteil, dass ein Übersprechen zwischen den beiden Sensorteilen über den Stator wirkungsvoll verhindert werden kann. Sie kann gegebenenfalls auch durch eine Metallisierung der Leiterplatte selbst gebildet sein oder ein zur Leiterplatte separates Bauteil darstellen.

Vorzugsweise ist der Rotor mit seiner umlaufenden Zahnstruktur direkt an den genannten Halter angespritzt, an welchem der Stator angeordnet ist und welcher mit dem zweiten Wellenteil der Lenkwelle verbunden wird. Dadurch entfällt ein zusätzliches Zahnrad als eigenständiges Teil, wie auch der zugehörige Fügeprozess des Rotors auf den Halter. Durch diese einstückige Ausgestaltung des Rotors mit dem Halter ergibt sich außerdem ein verbesserter Rundlauf der jeweiligen Zahnelemente.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nachfolgend anhand eines bevorzugten Ausführungsbeispiels, wie auch unter Bezugnahme auf die beigefügten Zeichnungen näher erläutert.

Es zeigen:
- Fig. 1: in schematischer Explosionsdarstellung eine integrierte Vorrichtung für ein Kraftfahrzeug mit einer Drehmomentsensoreinrichtung und einer Lenkwinkelsensoreinrichtung;
- Fig. 2: in vergrößerter Darstellung einen Bereich der Vorrichtung gemäß Fig. 1;
- Fig. 3: in vergrößerter Darstellung einen weiteren Bereich der Vorrichtung gemäß Fig. 1;
- Fig. 4 und 5: unterschiedliche Ausführungsformen eines Flussleiters;
- Fig. 6: in schematischer und perspektivischer Darstellung die Vorrichtung gemäß Fig. 1 in zusammengebautem Zustand;
- Fig. 7: in schematischer und teilweiser Schnittdarstellung eine erste axiale Anordnung von elektronischen Bauelementen der Vorrichtung;
- Fig. 8 und 9: in schematischer und teilweiser Schnittdarstellung eine zweite axiale Anordnung von elektronischen Bauelementen der Vorrichtung, wobei Schnittansichten einer Leiterplatte entlang zweier verschiedener Schnittebenen gezeigt sind;
- Fig. 10: in schematischer und teilweiser Schnittdarstellung eine weitere Anordnung von elektronischen Bauelementen der Vorrichtung, wobei als Leiterplatte eine Flex-Platine verwendet wird;
- Fig. 11: in schematischer und teilweiser Schnittdarstellung eine weitere Anordnung von elektronischen Bauelementen der Vorrichtung, wobei unterschiedliche Flussleiter verwendet werden;
- Fig. 12: in schematischer und teilweiser Schnittdarstellung eine weitere Anordnung von elektronischen Bauelementen der Vorrichtung, wobei sich die Leiterplatte parallel zur axialen Richtung erstreckt; und
- Fig. 13: in schematischer Darstellung beispielhafte Flussleiter.

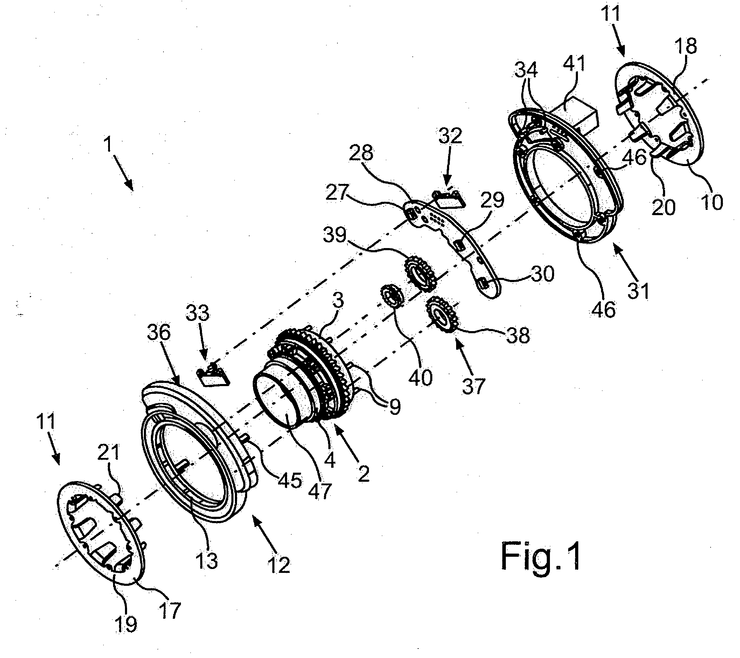

Eine in Fig. 1 dargestellte und insgesamt mit 1 bezeichnete Vorrichtung gemäß einer Ausführungsform der Erfindung umfasst sowohl eine Drehmomentsensoreinrichtung als auch eine Lenkwinkelsensoreinrichtung. Die Drehmomentsensoreinrichtung dient zum Messen eines auf eine Lenkwelle eines Kraftfahrzeugs aufgebrachten Drehmoments. Die Lenkwinkelsensoreinrichtung dient zur Erfassung des aktuellen Lenkwinkels der Lenkwelle. Die Vorrichtung 1 ist als eine integrale Baueinheit ausgebildet, so dass eine integrale Sensorvorrichtung geschaffen wird, welche sowohl zur Erfassung des Drehmoments als auch zum Messen des Lenkwinkels ausgebildet ist.

Die Lenkwelle des Fahrzeugs beinhaltet zwei Wellenteile, welche über einen in den Fig. nicht dargestellten Torsionsstab miteinander verbunden sind. An einem der Wellenteile wird ein Halter 2 drehfest angebracht, während an dem anderen Wellenteil ein in den Fig. nicht dargestellter Magnet - nämlich Permanentmagnet beispielsweise in Form eines Ringmagneten - drehfest gehalten ist. Der Halter 2 kann ein einstückig ausgebildetes Kunststoffteil und/oder ein Gussbauteil sein. Optional kann der Halter 2 auch mit einer Hülse 47, zum Beispiel aus Metall, oder aber anderen Befestigungselementen wie Laschen, Haken, Clipsen und dergleichen versehen sein, um den Halter 2 an dem zugeordneten Wellenteil zu befestigen.

Die Komponenten der Drehmomentsensoreinrichtung sind im Wesentlichen: der genannte Permanentmagnet, ein magnetischer Stator 11 mit zwei gleichen Statorteilen 10, 17, zwei Flussleiter 32, 33 sowie ein Magnetsensor 27, der an einer Leiterplatte 28 platziert ist. Zur Lenkwinkelsensoreinrichtung gehören hingegen: Zwei Magnetfelddetektoren bzw. Magnetsensoren 29, 30, ein Getriebe 37 mit Zahnrädern 38, 39, 40 sowie ein Rotor 15, der an den Halter 2 angespritzt ist.

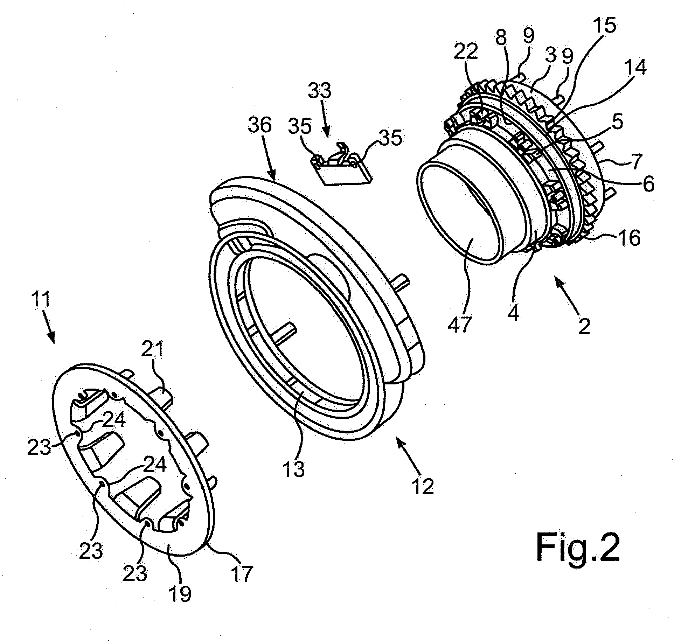

Der Halter 2 umfasst, wie insbesondere aus Fig. 2 hervorgeht, zwei axial nebeneinander angeordnete zylindrische Bereiche, nämlich einerseits einen ersten zylindrischen axialen Bereich 3 sowie einen in axialer Richtung versetzt angeordneten sowie konzentrisch zum ersten Bereich 3 liegenden und einen etwas geringeren Durchmesser aufweisenden zweiten axialen Bereich 4. Der erste axiale Bereich 3 ist über eine Vielzahl von in Umfangsrichtung verteilt angeordneten, strebenförmigen bzw. speichenförmigen Verbindungselementen 5 mit dem zweiten axialen Bereich 4 verbunden. Zwischen den Verbindungselementen 5 sind radiale Aussparungen 6 ausgebildet, welche Durchgangsöffnungen sind.

Der erste axiale Bereich 3 hat zwei axiale Randkanten, nämlich einerseits eine erste äußere Randkante 7 sowie andererseits eine zweite axiale Randkante 8, welche dem zweiten axialen Bereich 4 zugewandt ist.

An der ersten axialen Randkante 7 sind eine Vielzahl von axialen Stiften bzw. Bolzen 9 ausgebildet, welche als axiale Fortsätze in axialer Richtung parallel zueinander von der Kante 7 abstehen. Über diese Stifte 9 wird der Halter 2 mit einem ersten Statorteil 10 des insgesamt mit 11 bezeichneten Stators verbunden.

Zur Vorrichtung 1 gehört außerdem ein Gehäuse 12, welches zusätzlich auch die Funktion eines Gleitstücks aufweist. Das Gehäuse 12 hat eine innere Hülse 13, welche ringförmig umlaufend ausgebildet ist und in welche der erste axiale Bereich 3 des Halters 2 aufgenommen wird, so dass der äußere Umfang des ersten Bereiches 3 des Halters 2 an einem inneren Umfang der Hülse 13 gleiten kann. Dabei wird der erste axiale Bereich 3 des Halters 2 in die Hülse 13 bis hin zu einem Flansch 14 des Halters 2 eingesteckt, welcher durch einen Rotor 15 mit einer Zahnstruktur 16 gebildet ist. Der Rotor 15 mit der Zahnstruktur 16 ist dabei an dem ersten axialen Bereich 3 angespritzt.

Neben dem ersten Statorteil 10 weist der Stator 11 zusätzlich auch ein zweites Statorteil 17 auf. Jedes Statorteil 10, 17 ist jeweils einstückig ausgebildet und weist ein ringförmiges, flanschartiges und sich in radialer Richtung nach außen erstreckendes Randelement 18 bzw. 19 auf, wie auch eine Vielzahl von Zahnelementen 20 bzw. 21. Die Zahnelemente 20, 21 stehen von dem jeweiligen Randelement 18, 19 in axialer Richtung ab, und zwar in Richtung zum ersten axialen Bereich 3 des Halters 2 hin. Die Zahnelemente 20, 21 erstrecken sich somit in axialer Richtung etwa parallel zu einer Drehachse der Lenkwelle. Die beiden Statorteile 10, 17 sind dabei gleich ausgebildet, so dass auch die Anzahl der Zahnelemente 20 des ersten Statorteils 10 gleich der Anzahl der Zahnelemente 21 des zweiten Statorteils 17 ist.

Zur Befestigung des Stators 11 an dem Halter 2 wird einerseits das Statorteil 17 auf den zweiten axialen Bereich 4 des Halters 2 aufgesteckt, so dass die Zahnelemente 21 durch die Aussparungen 6 zwischen den Verbindungselementen 5 axial hindurch gesteckt und an einem Innenumfang des ersten axialen Bereiches 3 des Halters 2 abgestützt werden. Nach dem Aufstecken des Statorteils 17 auf den zweiten Bereich 4 des Halters 2 sind die Zahnelemente 21 im Inneren des ersten axialen Bereiches 3 des Halters 2 angeordnet, so dass lediglich das Randelement 19 radial nach außen hin absteht und an der axialen Randkante 8 des ersten axialen Bereichs 3 des Halters 2 axial abgestützt ist.

Beim Aufstecken des Statorteils 17 auf den zweiten axialen Bereich 4 des Halters 2 werden an den Verbindungselementen 5 im Bereich der Randkante 8 ausgebildete Stifte 22 des ersten axialen Bereiches 3 in korrespondierende Durchgangsöffnungen 23 aufgenommen und durch diese Durchgangsöffnungen 23 hindurch gesteckt, welche in dem Randelement 19 des Statorteils 17 ausgebildet sind. Diese Durchgangsöffnungen 23 sind in jeweiligen Laschen 24 ausgebildet, welche in Richtung zum Zentrum des Stators 11 radial nach innen hin abstehen bzw. zum Zentrum hin zeigen. Zwischen jeweils zwei benachbarten Zahnelementen 21 ist dabei jeweils eine solche Lasche 24 mit einer Durchgangsöffnung 23 vorgesehen.

Nach Aufstecken des Statorteils 17 auf den zweiten axialen Bereich 4 des Halters 2 und somit nach Aufnehmen der Stifte 22 in die Durchgangsöffnungen 23 können die freien Enden der Stifte 22 umgeformt und somit zu Nietköpfen verarbeitet werden, um einen sicheren Sitz des Statorteils 17 an dem Halter 2 zu gewährleisten.

Das andere Statorteil 10 wird an dem Halter 2 derart befestigt, dass die Zahnelemente 20 in das Innere des ersten axialen Bereiches 3 des Halters 2 von der dem Statorteil 17 gegenüberliegenden axialen Stirnseite des Halters 2 bzw. von der Seite der Randkante 7 eingesteckt werden. Dabei gleiten die Zahnelemente 20 an dem Innenumfang des zylindrischen Bereiches 3. Im zusammengebauten Zustand befinden sich die Zahnelemente 20 jeweils zwischen zwei benachbarten Zahnelementen 21 des anderen Statorteils 17 und liegen an dem Innenumfang des Bereichs 3 an. Auch das Statorteil 10 weist eine Vielzahl von Laschen 25 auf, in denen jeweils eine Durchgangsöffnung 26 ausgebildet ist. Durch diese Durchgangsöffnungen 26 werden die korrespondierenden Stifte 9 hindurch gesteckt, die an der Randkante 7 des Halters 2 ausgebildet sind. Die freien Enden dieser Stifte 9 werden zu Nietköpfen umgeformt und somit eine sichere Befestigung des Statorteils am Halter 2 gewährleistet.

Grundsätzlich können die beiden Statorteile 10, 17 auf verschiedenste Arten an dem Halter 2 fixiert werden. Die Kombination aus Stiften 9 bzw. 22 und Durchgangsöffnungen 26 bzw. 23 stellt lediglich eine beispielhafte Ausführungsform dar. Es ist beispielsweise auch möglich, die Statorteile 10, 17 an dem Halter 2 über Halteringe zu fixieren, welche per Laserschweißen oder aber Ultraschallschweißen an dem Halter 2 fixiert werden.

Die Drehmomentsensoreinrichtung weist einen Magnetsensor 27 auf, welcher auf einer Leiterplatte 28 angeordnet ist. Der Magnetsensor 27 ist als elektronisches SMD-Bauelement ausgebildet, welches mittels lötfähiger Anschlussflächen direkt auf die Leiterplatte 28 gelötet wird. Die entsprechende Technik wird als "Oberflächenmontage" (Surface-Mounting-Technology) bezeichnet. Die Leiterplatte 28 ist eine gemeinsame Platine sowohl für den Magnetsensor 27 der Drehmomentsensoreinrichtung als auch für Bauelemente der Lenkwinkelsensoreinrichtung. An der Leiterplatte 28 sind nämlich auch Magnetfelddetektoren bzw. Sensorelemente 29, 30 der Lenkwinkelsensoreinrichtung angeordnet, welche ebenfalls als SMD-Bauelemente ausgebildet sind.

Zum Verschließen des Gehäuses 12 umfasst die Vorrichtung 1 einen Deckel 31.

Die Vorrichtung 1 umfasst außerdem im Ausführungsbeispiel zwei Flussleiter 32, 33, welche zur Drehmomentsensoreinrichtung gehören. Die beiden Flussleiter 32, 33 werden einerseits an dem Deckel 31 und andererseits am Gehäuse 12 befestigt. Der Deckel 31 weist dazu zwei Stifte 34 auf, welche durch korrespondierende Durchgangsöffnungen 35 im Flussleiter 32 hindurch gesteckt werden. Entsprechende Stifte sind auch auf der Seite des Gehäuses 12 für den zweiten Flussleiter 33 bereitgestellt. Durch Umformung der Stifte 34 können Nietköpfe gebildet werden, welche eine wirkungsvolle und betriebssichere Fixierung der Flussleiter 32, 33 an dem Deckel 31 bzw. dem Gehäuse 12 gewährleisten.

Das Gehäuse 12 weist eine Aufnahme 36 auf, in welche sowohl die Leiterplatte 28 mit den Bauelementen 27, 29, 30 als auch ein Zahnradgetriebe 37 der Lenkwinkelsensoreinrichtung aufgenommen werden können. Das Zahnradgetriebe 37 hat zwei Zahnräder 38, 39, deren Zähne in jene des Rotors 15 greifen und auf diese Weise mit dem Rotor 15 bzw. dem Halter 2 drehbar gekoppelt sind. Im Zahnrad 38 ist ein Permanentmagnet angeordnet. Die Rotationsachse des Zahnrads 38 ist dabei parallel zur Drehachse der Lenkwelle. Ein zweites Teilsensorsystem der Lenkwinkelsensoreinrichtung umfasst das Zahnrad 39, welches als Zwischenzahnrad mit einem Antriebszahnrad bzw. Ritzel 40 drehbar gekoppelt ist. Das Antriebszahnrad 40 enthält wiederum einen Permanentmagneten. Die Zahnräder 38, 39, 40 werden in der Aufnahme 36 des Gehäuses 12 untergebracht und darin drehbar gelagert. In der Aufnahme 36 ist eine Innenverzahnung vorhanden, an der das Antriebszahnrad 40 entlang einer Zykloide abrollen kann. Die Bohrung des Zahnrads 39 ist hierzu exzentrisch ausgebildet. Die Leiterplatte 28 und der Deckel 31 sind gegenstückig zur Aufnahme 36 ausgebildet und schließen das Getriebe 37 von oben her ein. Die Magnetfelddetektoren 29, 30 sind im Ausführungsbeispiel Hall-Sensoren. Die Magnetfelddetektoren 29, 30 kommen gegenüber den Permanentmagneten der Zahnräder 40 bzw. 38 zu liegen. Sie stehen dabei senkrecht zur Rotationsachse der Zahnräder 38, 39. Der Magnetfelddetektor 29 kommt auf der Drehachse des Zahnrads 39 zu liegen, während der Magnetfelddetektor 30 senkrecht zur Drehachse des Zahnrads 38 sitzt.

In typischen Fahrzeuglenkungen wird ein Bereich von fünf bis sieben vollen Umdrehungen der Lenkwelle eindeutig erfasst. Um auch bei mehr als einer vollen Umdrehung der Lenkwelle den absoluten Drehwinkel eindeutig zu bestimmen, werden zwei Baugruppen eingesetzt. Die eine Baugruppe bildet einen Umdrehungssensor (Revolution Sensor) und umfasst die Zahnräder 39, 40 und den Magnetfelddetektor 29. Es wird beispielsweise ein Übersetzungsverhältnis von Rotor 15 zu Zahnrad 40 von 6:1 gewählt. Die andere Baugruppe dient der Feinbestimmung des Drehwinkels (Angle Sensor) und umfasst im Wesentlichen das Zahnrad 38 mit seinem Permanentmagneten sowie den Magnetfelddetektor 30. Für das Übersetzungsverhältnis von Rotor 15 zu Zahnrad 38 wird beispielsweise ein Wert von 1:3 gewählt. Aus den beiden mit den Magnetfelddetektoren 29, 30 gemessenen Zahnradwinkeln kann dann in bekannter Weise über das Nonius-Prinzip der Drehwinkel der Lenkwelle unmittelbar berechnet werden. Geeignete Berechnungsverfahren hierfür sind aus dem Stand der Technik bekannt und beispielsweise in der DE 195 06 938 A1 und DE 199 62 241 A1 offenbart.

Alternativ kann auch ein "kleiner Nonius" für das Übersetzungsverhältnis gewählt werden, um den aktuellen Lenkwinkel bestimmen zu können. Es kann dabei auf das Zahnrad 40 verzichtet werden, und die beiden Zahnräder 38, 39 können mit jeweils einem Magneten versehen werden. Die Zahnräder 38, 39 weisen dann unterschiedliche Anzahl von Zähnen auf, sodass sich auf den vollen Lenkwinkelbereich von 5 bis 7 Umdrehungen der Lenksäule beispielsweise das Zahnrad 39 einmal öfter als das Zahnrad 38 dreht. Auch somit kann auf den tatsächlichen Lenkwinkel zurückgeschlossen werden.

In den Deckel 31 kann auch ein Stecker 41 integriert sein, über welchen die Bauelemente 27, 29, 30 an ein externes Steuergerät elektrisch angeschlossen werden können. Über den Stecker 41 wird also eine elektrische Verbindung zwischen der Vorrichtung 1 einerseits und einem Steuergerät andererseits bereitgestellt.

Werden die Flussleiter 32, 33 an dem Deckel 31 bzw. dem Gehäuse 12 befestigt, so erstrecken sich die Flussleiter 32, 33 in radialer Richtung und somit parallel zu den Randelementen 18, 19. Die beiden Flussleiter 32, 33 sind dabei auf einander gegenüberliegenden axialen Seiten der Leiterplatte 28 angeordnet, wobei zumindest einer der Flussleiter 32, 33 auch axial zwischen den Randelementen 18, 19 liegt. Der Flussleiter 32 liegt dabei in einem geringen Abstand zum Randelement 18, während der zweite Flussleiter 33 in einem geringen Abstand zum Randelement 19 angeordnet ist.

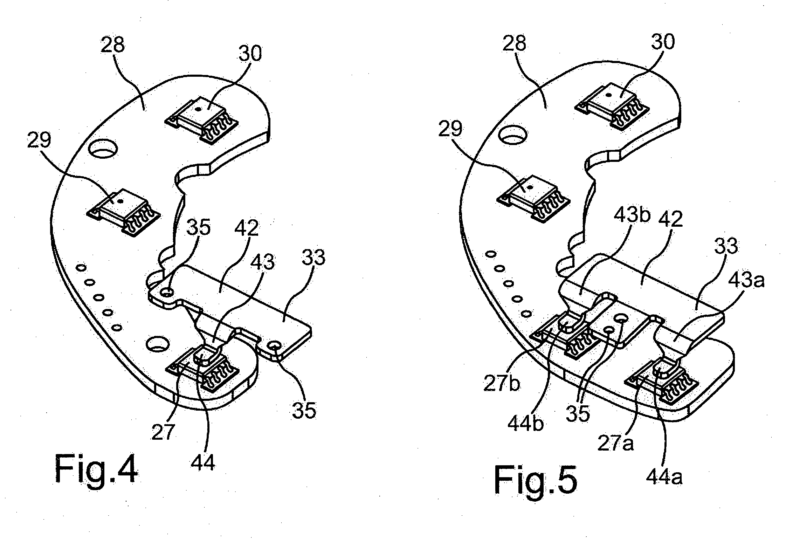

Die Ausgestaltung der Flussleiter 32, 33 wird nun Bezug nehmend auf die Fig. 4 und 5 näher erläutert. In Fig. 4 ist dabei der Flussleiter 33 gemäß einer Ausführungsform dargestellt, wobei der Flussleiter 32 entsprechend identisch aufgebaut ist. Der Flussleiter 33 hat einen plattenförmigen und im Wesentlichen rechteckförmigen Empfangsbereich 42, in welchem die Durchgangsöffnungen 35 ausgebildet sind. In einem rechten Winkel steht von dem Empfangsbereich 42 ein Steg 43 ab, von welchem wiederum ebenfalls unter einem rechten Winkel eine radiale Lasche 44 absteht, die sich parallel zum Empfangsbereich 42 erstreckt. Die Lasche 44 ist deutlich kleiner als der Empfangsbereich 42 und ebenfalls plattenförmig ausgebildet. Sie ist in axialer Richtung versetzt zum Empfangsbereich 42 angeordnet. Die Lasche 44 ist in gegenseitiger axialer Überlappung mit dem Magnetsensor 27 der Drehmomentsensoreinrichtung und dabei in einem sehr geringen axialen Abstand zum Magnetsensor 27 angeordnet.

Auch der erste Flussleiter 32 hat eine entsprechende Lasche 44, die sich in eine in der Leiterplatte 28 unterhalb des Magnetsensors 27 ausgebildete Aussparung axial hinein erstreckt, um eine zuverlässige Übertragung des magnetischen Flusses zu gewährleisten. Somit ist auch die Lasche 44 des ersten Flussleiters 32 in axialer Überlappung mit dem Magnetsensor 27 angeordnet, so dass der Magnetsensor 27 axial zwischen den beiden Laschen 44 angeordnet ist.

Im Beispiel gemäß Fig. 4 kann der einzige Magnetsensor 27 als einfacher oder aber als dualer Sensor ausgeführt sein. Bei einem dualen Magnetsensor sind dabei in ein einziges SMD-Bauelement insgesamt zwei Sensorelemente integriert, welche zur separaten Erfassung des magnetischen Flusses ausgebildet sind und separat voneinander Sensorsignale bereitstellen.

Im Ausführungsbeispiel gemäß Fig. 5 weist der Flussleiter 33 insgesamt zwei Laschen 44a, 44b, die über jeweilige Stege 43a, 43b mit dem Empfangsbereich 42 verbunden sind. Die Durchgangsöffnungen 35 sind nun zwischen den Stegen 43a, 43b ausgebildet. Die beiden Laschen 44a, 44b liegen dabei in einer gemeinsamen Ebene und erstrecken sich parallel zum Empfangsbereich 42. Jede Lasche 44a, 44b ist in axialer Überdeckung mit einem separaten Magnetsensor 27a, 27b angeordnet, welche beide an der Leiterplatte 28 als SMD-Bauelemente angebracht sind. Die Magnetsensoren 27a, 27b können einfache oder duale Sensoren sein.

Im Ausführungsbeispiel gemäß Fig. 5 hat auch der erste Flussleiter 32 entsprechend zwei separate Laschen, welche in axialer Überlappung mit den jeweiligen Magnetsensoren 27a, 27b angeordnet sind und hierbei z.B. in jeweiligen Aussparungen in der Leiterplatte 28 liegen.

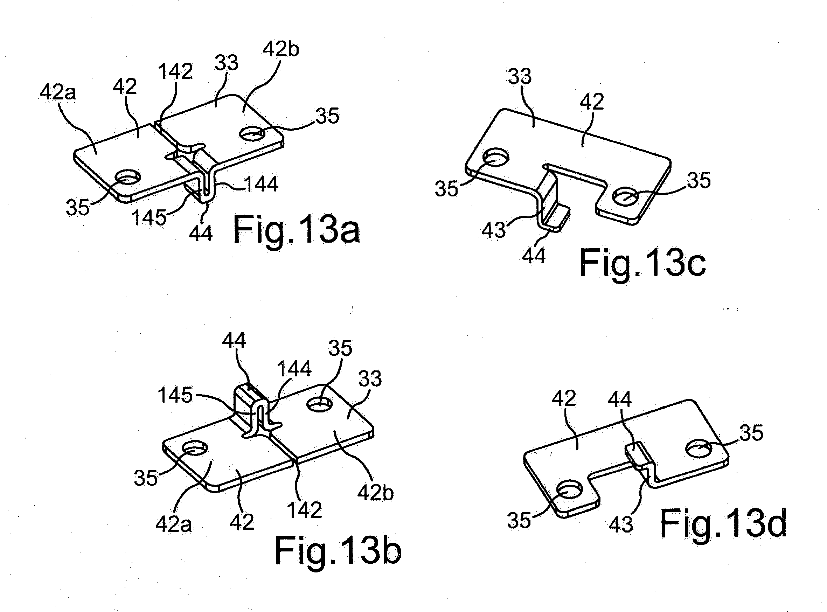

Zwei weitere Beispiele von Flussleitern 33 sind in den Figuren 13a bis 13d dargestellt. Der Flussleiter 33 gemäß Fig. 13a und 13b hat ebenfalls eine Lasche 44, die jedoch im Wesentlichen axial orientiert ist und in axialer Richtung zeigt. Diese Lasche 44 ist dadurch gebildet, dass etwa in der Mitte des Empfangsbereichs 42 ein Schlitz 142 ausgebildet ist, der den Empfangsbereich 42 in zwei Teile 42a, 42b unterteilt. Von jedem Teil 42a, 42b steht dabei ein axialer Fortsatz 144, 145 senkrecht ab, wobei die Fortsätze 144, 145 an ihren Enden zusammengeführt sind und somit insgesamt die axiale Lasche 44 bilden. Die Spitze dieser Lasche 44 liegt dann in axialer Überlappung mit dem Magnetsensor 27.

Ein weiteres Beispiel ist in den Figuren 13c und 13d dargestellt. Dieser Flussleiter 33 entspricht im Wesentlichen dem gemäß Fig. 4, wobei sich die Lasche 44 nunmehr in tangentialer Richtung erstreckt. Sie ist über den Steg 43 mit dem Empfangsbereich 42 verbunden. Lediglich die Orientierung des Stegs 43 und somit der Lasche 44 unterscheidet sich somit von der Ausführungsform gemäß Fig. 4.

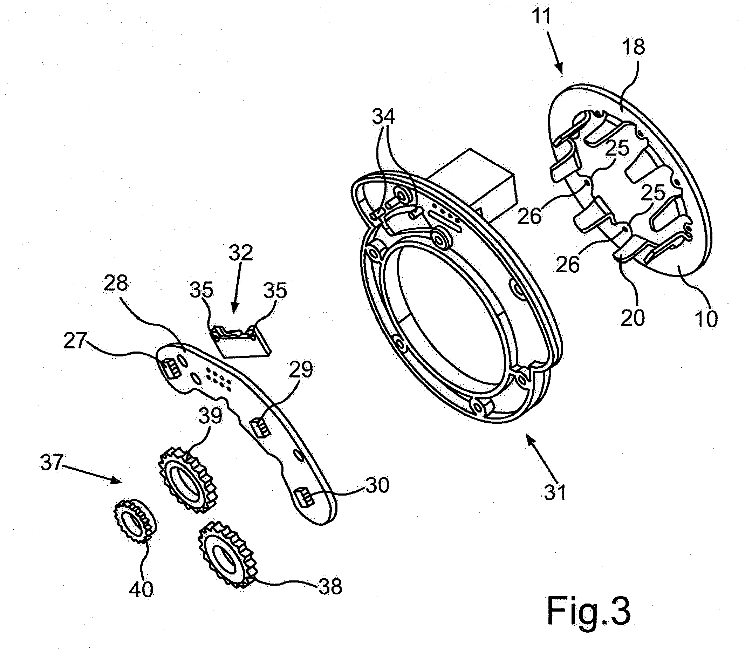

Mit erneutem Bezug auf die Fig. 1 bis 3 weist das Gehäuse 12 Stifte bzw. Zapfen 45 auf, welche in korrespondierende Durchgangsöffnungen 46 des Deckels 31 aufgenommen werden können. Die Befestigung des Deckels 31 am Gehäuse 12 erfolgt dann durch Umformen der Stifte 45 zu Nietköpfen.

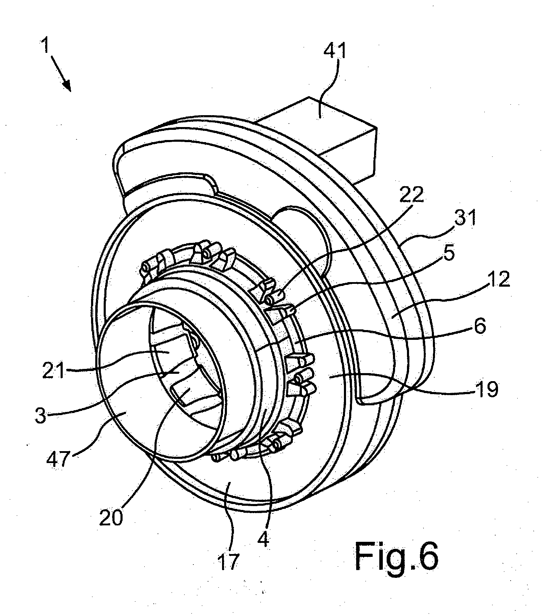

Die Vorrichtung 1 ist im zusammengebauten Zustand in Fig. 6 dargestellt. Zu erkennen ist der zweite axiale Bereich 4 des Halters 2, der aus dem Gehäuse 12 axial herausragt. An diesen Bereich 4 schließt sich in axialer Richtung unmittelbar die Hülse 47 an, über welche der Halter 2 mit dem zugeordneten Wellenteil verbunden wird. In Fig. 6 ist außerdem das Statorteil 17 mit seinem Randelement 19 dargestellt, welches über die Stifte 22 am Halter 2 befestigt ist. Im Inneren des Gehäuses 12 und somit nicht dargestellt sind die Flussleiter 32, 33 sowie die Leiterplatte 28 mit den Bauelementen 27, 29, 30 und das Getriebe 37. Das Gehäuse 12 wird zusammen mit dem Deckel 31 an einem Fahrzeugteil befestigt und die Vorrichtung 1 wird über den Stecker 41 elektrisch angeschlossen. Das Gehäuse 12 ist somit gegenüber der Lenkwelle fixiert. Der Halter 2 mit den Statorteilen 10, 17 kann dabei relativ zum Gehäuse 12 und zu den Flussleitern 32, 33 gedreht werden, nämlich zusammen mit der Lenkwelle. In Fig. 6 sind außerdem die jeweiligen Zahnelemente 20, 21 der beiderseitigen Statorteile 10, 17 zu erkennen. Diese Zahnelemente 20, 21 können beispielsweise in Vertiefungen angeordnet sein, welche an dem inneren Umfang des ersten axialen Bereiches 3 des Halters 2 ausgebildet sind.

Die Aufnahme 36 für das Getriebe 37 ist auf der gleichen axialen Höhe wie die Hülse 13 ausgebildet und radial zur Hülse 13 versetzt angeordnet. Im zusammengebauten Zustand befindet sich die Leiterplatte 28 axial zwischen den jeweiligen Randelementen 18, 19 der Statorteile 10, 17. Für die axiale Anordnung der Bauelemente 27, 29, 30 können nun unterschiedliche Ausführungsformen vorgesehen sein:

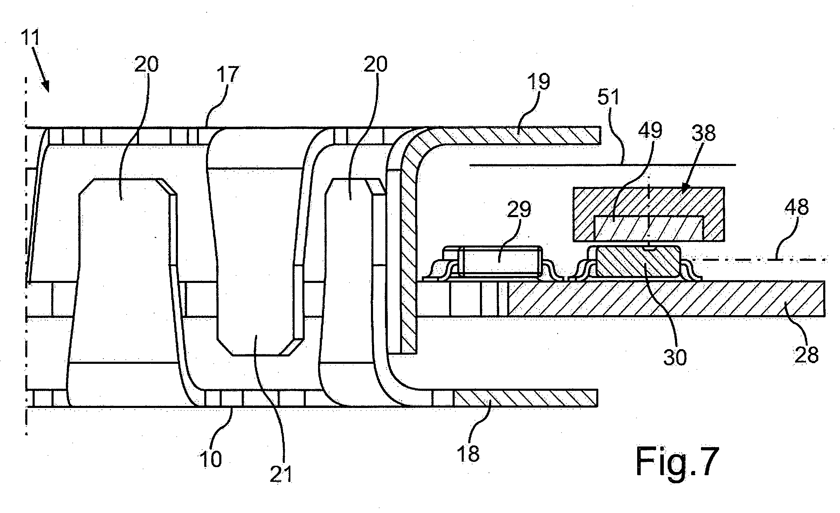

Gemäß einer ersten Variante können die Bauelemente 27, 29, 30 in axialer Richtung mittig zwischen den Randelementen 18, 19 angeordnet sein. Eine solche Anordnung ist in Fig. 7 gezeigt, welche eine teilweise Schnittdarstellung durch die Leiterplatte 28 und den Magnetfelddetektor 30 veranschaulicht. Perspektivisch dargestellt sind die beiden Statorteile 10, 17 mit dem jeweiligen Randelement 17, 18. Die Zahnelemente 20 greifen zwischen die Zahnelemente 21. Eine genau axial mittig zwischen den Randelementen 17, 18 verlaufende Mittelebene ist mit 48 bezeichnet, welche eine Symmetrieebene des Stators 11 darstellt. Die Bauelemente 27, 29, 30 liegen bei diesem Ausführungsbeispiel axial mittig in der Symmetrieebene bzw. Mittelebene 48. Zwangsläufig sind somit die Zahnräder 38, 39, 40 axial bezüglich der Mittelebene 48 versetzt und somit asymmetrisch angeordnet. Dies ist in Fig. 7 anhand des Zahnrades 38 mit seinem Permanentmagneten (49) gezeigt.

Im Beispiel gemäß Fig. 7 sind die beiden Flussleiter 32, 33 spiegelsymmetrisch bezüglich der Mittelebene 48 angeordnet. Die jeweiligen Empfangsbereiche 42 der Flussleiter 32, 33 können - je nach Länge des Stegs 43 - entweder axial innerhalb des Stators 11 und somit axial zwischen den Randelementen 18, 19 oder aber axial außerhalb des Stators 11 liegen. Die Permanentmagnete 49 der Zahnräder 38, 40 können derart oberflächenmagnetisiert werden, dass das Magnetfeld auf der axialen Höhe der beiden Randelemente 18, 19 gleich groß ist und sich somit gegenseitig aufhebt. Somit wird ein Übersprechen zwischen den beiden Sensorarten verhindert. Die Zahnräder 38, 39, 40 können optional auch in radialer Richtung ein wenig weiter nach außen gebracht werden, um das Übersprechen weiterhin zu reduzieren.

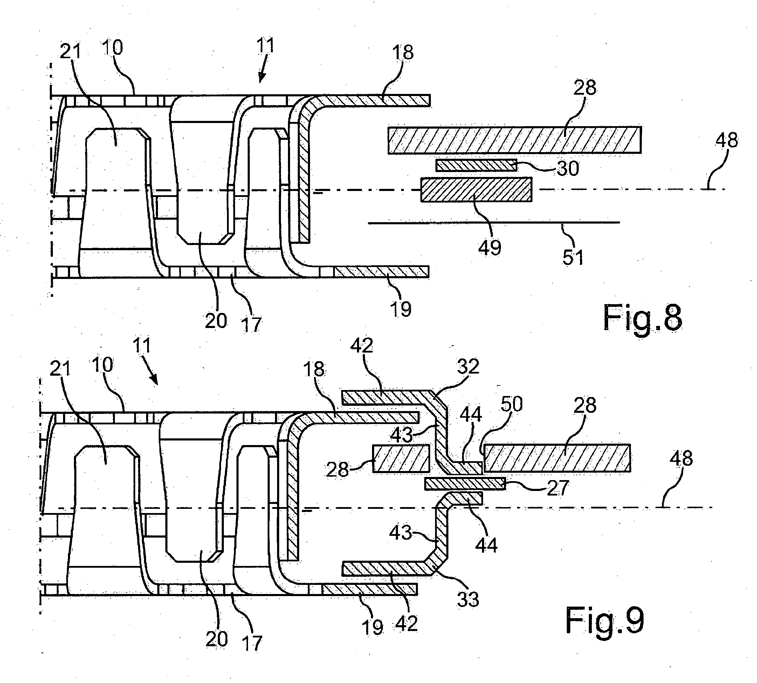

Gemäß einer zweiten Variante können die Bauelemente 27, 29, 30 in axialer Richtung außermittig zwischen den Randelementen 18, 19 angeordnet sein, und die Permanentmagnete 49 der Zahnräder 38, 40 können axial mittig zwischen den Randelementen 38, 40 liegen. Dann entspricht der axiale Abstand zwischen den Permanentmagneten und dem Randelement 38 dem axialen Abstand zwischen den Permanentmagneten und dem anderen Randelement 40. Eine solche Anordnung der Leiterplatte 28 und des Getriebes 37 ist in den Figuren 8 und 9 dargestellt. Während in Fig. 8 eine Schnittdarstellung durch die Leiterplatte 28 an der Stelle des Magnetdetektors 30 gezeigt ist, zeigt Fig. 9 eine Schnittdarstellung durch die Leiterplatte 28 auf der Höhe des Magnetsensors 27. Der Stator 11 ist jeweils perspektivisch dargestellt. Wie aus Fig. 8 hervorgeht, liegt der Permanentmagnet 49 genau in der Mittelebene 48. Auch bei einem herkömmlichen und nicht speziell oberflächenmagnetisierten Magneten 49 ergibt sich somit im Wesentlichen das gleiche Magnetfeld an den jeweiligen Randelementen 18, 19.

Gemäß Fig. 9 sind die beiden Flussleiter 32, 33 asymmetrisch bezüglich der Mittelachse 48 angeordnet. Der Empfangsbereich 42 eines der Flussleiter 32, 33 liegt dabei axial außerhalb des Stators 11 bzw. axial versetzt zum Stator 11, während der Empfangsbereich 42 des anderen Flussleiters 32, 33 axial innerhalb des Stators 11 liegt. In Fig. 9 ist außerdem die durchgängige Aussparung 50 in der Leiterplatte 28 unterhalb des Magnetsensors 27 zu sehen. Innerhalb dieser Aussparung 50 ist die Lasche 44 des Flussleiters 32 angeordnet, der auf der Rückseite der Leiterplatte 28 angeordnet ist. Der Magnetsensor 27 ist somit sehr dicht durch die Laschen 44 der Flussleiter 32, 33 in sandwichbauweise umgibt bzw. liegt axial zwischen den beiden Laschen 44.

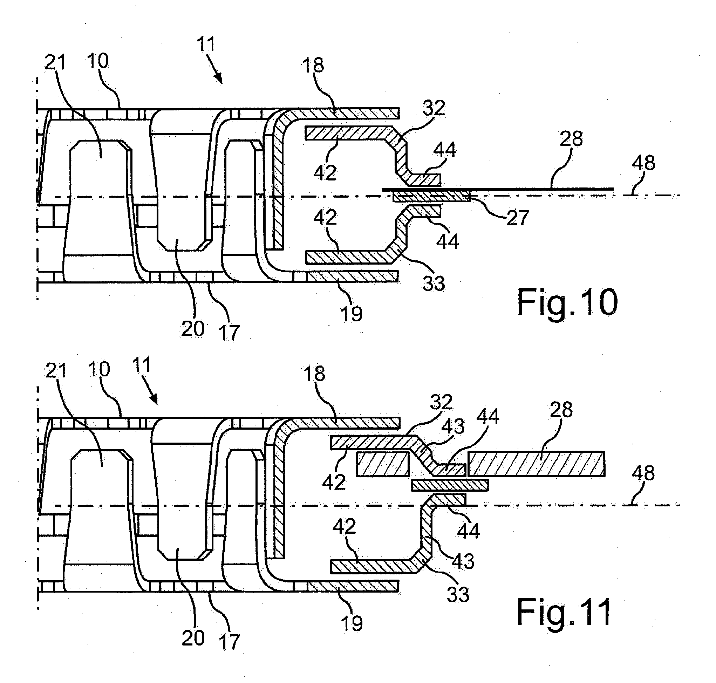

Gemäß Fig. 10 wird eine Flex-Leiterplatte 28 eingesetzt, d.h. eine Leiterplatte 28 in Form einer dünnen Folie, deren Dicke bevorzugt kleiner als 0,2 mm ist. Wie aus Fig. 10 hervorgeht, kann hier auf eine Aussparung unter dem Magnetsensor 27 verzichtet werden, weil der magnetische Fluss durch die Folie hindurch übertragen werden kann. Die beiden Flussleiter 32, 33 sind spiegelsymmetrisch bezüglich der Mittelebene 48 angeordnet. Die jeweiligen Empfangsbereiche 42 der Flussleiter 32, 33 sind hier axial innerhalb des Stators 11 und somit axial zwischen den Randelementen 18, 19 angeordnet, sodass die beiden Flussleiter 32, 33 vollständig axial wischen den Randelementen 18, 19 liegen.

Ein weiteres Beispiel ist in Fig. 11 dargestellt. Diese Anordnung entspricht im Wesentlichen der gemäß Fig. 9, jedoch mit dem Unterschied, dass die Flussleiter 32, 33 asymmetrisch ausgebildet sind und beide Flussleiter 32, 33 axial innerhalb des Stators 11 und somit axial zwischen den Randelementen 18, 19 angeordnet sind. Dies wird dadurch ermöglicht, dass der Flussleiter 32 mit einem kürzeren Steg 43 ausgebildet wird als der Flussleiter 33. Somit wird die axiale Bauhöhe weiterhin reduziert.

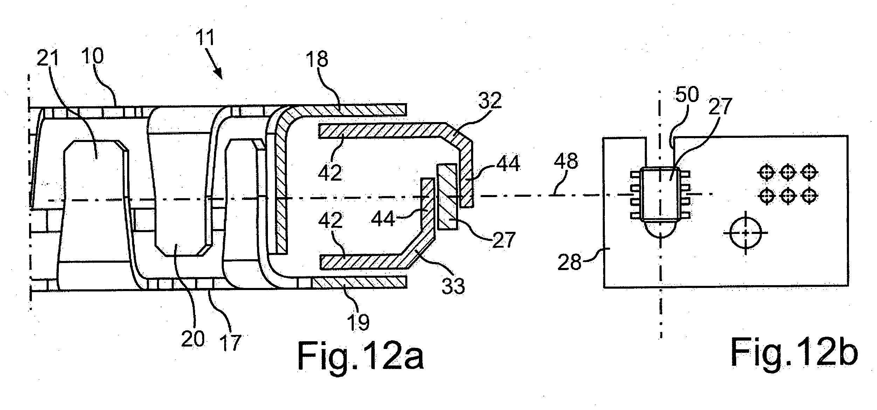

Ein noch weiteres Beispiel ist in den Figuren 12a und 12b dargestellt. Hier erstreckt sich die Leiterplatte 28 in axialer Richtung und ist somit parallel zur axialen Achse angeordnet. Entsprechend erstreckt sich auch der Magnetsensor 27 entlang der axialen Richtung, sodass eine gegenseitige Überlappung zwischen dem Magnetsensor 27 und den Laschen 44 in radialer Richtung gegeben ist. Dazu erstrecken sich die Laschen 44 nunmehr in axialer Richtung und somit parallel zur Leiterplatte 28. Sie können beispielsweise direkt von dem jeweiligen Empfangsbereich 42 senkrecht in Richtung zu dem jeweils anderen Flussleiter 32, 33 abstehen. Beide Flussleiter 32, 33 sind axial innerhalb des Stators 11 und somit axial zwischen den Randelementen 18, 19 angeordnet, sind jedoch asymmetrisch ausgebildet. Auch hier ist in der Leiterplatte 28 eine Aussparung 50 bereitgestellt, die sich nunmehr bis zur Kante der Leiterplatte 28 erstreckt und somit eine Einbuchtung bildet. In diese erstreckt sich dabei der Empfangsbereich 42 des Flussleiters 32 axial hinein, um die Lasche 44 dieses Flussleiters 32 auf der Rückseite des Magnetsensors 27 anordnen zu können. Das Beispiel gemäß den Figuren 12a und 12b erweist sich insbesondere bei einem reinen Drehmomentsensors als vorteilhaft, wenn auf die Lenkwinkelsensoreinrichtung verzichtet wird. Dann kann durch Geometrierestriktionen des Lenkungsgehäuses eine axiale Anordnung der Leiterplatte vorteilhaft sein. Es werden hier also zwei unterschiedlich geformte Flussleiter 32, 33 eingesetzt, um den Magnetfeldsensor 27 sowohl von der radialen Außen- als auch von der radialen Innenseite aus zu erreichen. Auch hier kann anstatt einer Standard-Leiterplatte 28 mit Aussparung 50 eine dünne Flex-Leiterplatte verwendet werden.

Bei allen Varianten kann axial zwischen den Permanentmagneten 49 der Zahnräder 38, 40 einerseits und zumindest einem der Randelemente 18, 19 andererseits optional auch eine metallische Abschirmung 51, insbesondere eine blechartige Abschirmung, bereitgestellt werden. In den Figuren 7 und 8 ist eine solche Abschirmung 51 auf der Rückseite der Leiterplatte 28 angeordnet und erstreckt sich parallel zur Mittelebene 48. Eine Abschirmung 51 kann jedoch auch ergänzend oder alternativ auf der anderen Seite der Leiterplatte 28 vorgesehen sein. Gegebenenfalls kann die Abschirmung 51 auch als eine Metallisierung der Leiterplatte 28 direkt an ihrer Rückseite oder Frontseite ausgebildet sein. Es können z.B. auf beiden axialen Seiten der Zahnräder 38, 39, 40 jeweilige Abschirmbleche vorgesehen werden, welche das Übersprechen zwischen den zwei Sensorarten über den Stator 11 verhindern. Die Permanentmagnete 49 können dabei diametral magnetisiert werden.

## Patentansprüche

1. Vorrichtung (1) für ein Kraftfahrzeug, mit einer Drehmomentsensoreinrichtung zur Erfassung eines auf eine Lenkwelle des Kraftfahrzeugs aufgebrachten Drehmoments, wobei die Drehmomentsensoreinrichtung einen magnetischen Stator (11) aufweist, der zum Leiten von magnetischem Fluss von einem Magneten hin zu zumindest einem Flussleiter (32, 33) und hierdurch zu zumindest einem Magnetsensor (27) der Drehmomentsensoreinrichtung ausgebildet ist,
wobei der zumindest eine Magnetsensor (27) an einer Leiterplatte (28) der Vorrichtung (1) angeordnet ist, wobei der zumindest eine Flussleiter (32, 33) eine Lasche (44) aufweist, die in axialer Richtung in gegenseitiger Überlappung mit dem Magnetsensor (27) angeordnet ist, und wobei die Vorrichtung (1) zwei Flussleiter (32, 33) mit jeweils zumindest einer Lasche (44) aufweist, die auf einander gegenüberliegenden Seiten der Leiterplatte (28) angeordnet sind, wobei die jeweiligen Laschen (44), insbesondere in axialer Richtung, in gegenseitiger Überlappung mit dem Magnetsensor (27) angeordnet sind,
wobei
die Leiterplatte (28) eine unter dem Magnetsensor (27) ausgebildete Aussparung (50) für die Lasche (44) eines der Flussleiter (32, 33) aufweist, wobei sich die Lasche (44) des ersten Flussleiters (32) in die unterhalb des Magnetsensors (27) ausgebildete Aussparung (50) axial hinein erstreckt, um eine zuverlässige Übertragung des magnetischen Flusses zu gewährleisten,
**dadurch gekennzeichnet, dass**
der zumindest eine Magnetsensor (27) als SMD-Bauelement ausgebildet ist und an mindestens zwei gegenüberliegenden Randabschnitten, der unter dem Magnetsensor (27) ausgebildeten Aussparung (50), direkt auf einer Seite der Leiterplatte (28) durch an zwei gegenüberliegenden Seiten des Magnetsensors angeordnete lötfähige Anschlussflächen gelötet ist.

2. Vorrichtung (1) nach Anspruch 1 ,
**dadurch gekennzeichnet, dass**
der zumindest eine Flussleiter (32, 33) einen in gegenseitiger axialer Überlappung mit dem Stator (11) angeordneten, plattenförmigen Empfangsbereich (42) zum Empfangen des magnetischen Flusses von dem Stator (11) aufweist, und dass die sich parallel zum Empfangsbereich (42) erstreckende Lasche (44) in axialer Richtung versetzt zum Empfangsbereich (42) angeordnet ist.

3. Vorrichtung (1) nach einem der vorhergehenden Ansprüche,
**dadurch gekennzeichnet, dass**
die Drehmomentsensoreinrichtung zwei als SMD-Bauelemente ausgebildete Magnetsensoren (27a, 27b) jeweils zum Erfassen des magnetischen Flusses aufweist, und dass der zumindest eine Flussleiter (32, 33) zwei, insbesondere in einer gemeinsamen radialen Ebene angeordnete, Laschen (44) aufweist, die jeweils in gegenseitiger Überlappung mit einem der Magnetsensoren (27a, 27b) angeordnet sind.

4. Vorrichtung (1) nach einem der vorhergehenden Ansprüche,
**dadurch gekennzeichnet, dass**
zumindest ein als SMD-Bauelement ausgebildeter Magnetsensor (27) der Drehmomentsensoreinrichtung zwei Sensorelemente jeweils zum Erfassen des magnetischen Flusses umfasst, welche in das SMD-Bauelement integriert sind.

5. Vorrichtung (1) nach einem der vorhergehenden Ansprüche,
**dadurch gekennzeichnet, dass**
der Stator (11) zwei in axialer Richtung beabstandet angeordnete Statorteile (10, 17) aufweist und der Magnetsensor (27), insbesondere mit der Leiterplatte (28), axial zwischen den Statorteilen (10, 17) angeordnet ist.

6. Vorrichtung (1) nach Anspruch 5,
**dadurch gekennzeichnet, dass**
der zumindest eine Magnetsensor (27) axial mittig zwischen den beiden Statorteilen (10, 17) angeordnet ist.

7. Vorrichtung (1) nach einem der vorhergehenden Ansprüche,
**dadurch gekennzeichnet, dass**
die Vorrichtung (1) weiterhin eine Lenkwinkelsensoreinrichtung zur Erfassung eines Lenkwinkels der Lenkwelle aufweist, welche einen Rotor (15) mit einer Zahnstruktur (16) und zumindest ein Zahnrad (38, 39, 40) mit einem Permanentmagneten (49) aufweist, das in Eingriff mit der Zahnstruktur (16) des Rotors (15) bringbar ist und mittels welchem eine Drehbewegung des Rotors (15) in eine Drehbewegung des Permanentmagneten (49) übertragbar ist, wobei die Lenkwinkelsensoreinrichtung einen Magnetfelddetektor (29, 30) zur Erfassung der Drehbewegung aufweist, der an der Leiterplatte (28) angeordnet ist.

8. Vorrichtung (1) nach Anspruch 5 oder 6 und Anspruch 7,
**dadurch gekennzeichnet, dass**
der Permanentmagnet (49) in axialer Richtung außermittig zwischen jeweiligen, sich in radialer Richtung parallel zueinander erstreckenden, ringförmigen Randelementen (18, 19) der Statorteile (10, 17) angeordnet ist.

9. Vorrichtung (1) nach Anspruch 5 und7,
**dadurch gekennzeichnet, dass**
der Permanentmagnet (49) in axialer Richtung mittig zwischen jeweiligen, sich in radialer Richtung parallel zueinander erstreckenden, ringförmigen Randelementen (18, 19) der Statorteile (10, 17) angeordnet ist, und dass der zumindest eine Magnetsensor (27) axial außermittig zwischen den Randelementen (18, 19) angeordnet ist.

10. Vorrichtung (1) nach einem der Ansprüche 7 bis9,
**dadurch gekennzeichnet, dass**
axial zwischen dem Permanentmagneten (49) einerseits und zumindest einem Statorteil (10, 17) des Stators (11) andererseits eine Abschirmung (51) für Magnetfelder angeordnet ist.

11. Vorrichtung (1) nach einem der Ansprüche 7 bis 10,
**dadurch gekennzeichnet, dass**
der Rotor (15) mit seiner Zahnstruktur (16) an einen Halter (2) angespritzt ist, an welchem der Stator (11) angeordnet ist.

## Claims

1. Device (1) for a motor vehicle having a torque sensor device for sensing a torque which is applied to a steering shaft of the motor vehicle, wherein the torque sensor device has a magnetic stator (11) which is designed to conduct magnetic flux from a magnet to at least one flux conductor (32, 33) and as a result to at least one magnet sensor (27) of the torque sensor device,
wherein the at least one magnet sensor (27) is arranged on a circuit board (28) of the device (1), wherein the at least one flux conductor (32, 33) has a clip (44) which is arranged with a mutual overlap with the magnet sensor (27) in the axial direction, and wherein the device (1) has two flux conductors (32, 33) which each have at least one clip (44) and are arranged on opposite sides of the circuit board (28), wherein the respective clips (44) are arranged with a mutual overlap with the magnet sensor (27), in particular in the axial direction,
wherein
the circuit board (28) has a cutout (50) formed under the magnet sensor (27), for the clip (44) of one of the flux conductors (32, 33), wherein the clip (44) of the first flux conductor (32) extends axially into the cutout (50) formed underneath the magnet sensor (27), in order to ensure a reliable transmission of the magnetic flux,
**characterized in that**
the at least one magnet sensor (27) is embodied as an SMD component and is soldered to at least two opposite edge sections of the cutout (50) formed under the magnet sensor (27), directly on one side of the circuit board (28), by solderable connection surfaces arranged on two opposite sides of the magnet sensor.

2. Device (1) according to Claim 1,
**characterized in that**
the at least one flux conductor (32, 33) has a plateshaped reception area (42), arranged with a mutual axial overlap with the stator (11), for receiving the magnetic flux from the stator (11) and **in that** the clip (44) which extends parallel to the reception area (42) is arranged offset in the axial direction with respect to the reception area (42).

3. Device (1) according to one of the preceding claims,
**characterized in that**
the torque sensor device has two magnet sensors (27a, 27b) which are embodied as SMD components and each have the purpose of sensing the magnetic flux, and **in that** the at least one flux conductor (32, 33) has two clips (44) which are arranged, in particular, in a common radial plane and are each arranged with a mutual overlap with one of the magnet sensors (27a, 27b).

4. Device (1) according to one of the preceding claims,
**characterized in that**
at least one magnet sensor (27), embodied as an SMD component, of the torque sensor device comprises two sensor elements, which each have the purpose of sensing the magnetic flux and are integrated into the SMD component.

5. Device (1) according to one of the preceding claims,
**characterized in that**
the stator (11) has two stator parts (10, 17) which are arranged spaced apart in the axial direction, and the magnet sensor (27) is arranged, in particular with the circuit board (28), axially between the stator parts (10, 17).

6. Device (1) according to Claim 5,
**characterized in that**
the at least one magnet sensor (27) is arranged in an axially centre position between the two stator parts (10, 17).

7. Device (1) according to one of the preceding claims,
**characterized in that**
the device (1) also has a steering angle sensor apparatus for sensing a steering angle of the steering shaft, which device (1) has a rotor (15) with a toothed structure (16) and at least one gearwheel (38, 39, 40) with a permanent magnet (49) which can be engaged with the toothed structure (16) of the rotor (15) and by means of which a rotational movement of the rotor (15) can be transferred into a rotational movement of the permanent magnet (49), wherein the steering angle sensor apparatus has a magnetic field detector (29, 30) which has the purpose of detecting the rotational movement and is arranged on the circuit board (28).

8. Device (1) according to Claim 5 or 6 and Claim 7,
**characterized in that**
the permanent magnet (49) is arranged off centre in the axial direction between respective annular edge elements (18, 19), extending parallel to one another in the radial direction, of the stator parts (10, 17) .

9. Device (1) according to Claims 5 and 7,
**characterized in that**
the permanent magnet (49) is arranged centrally in the axial direction between respective annular edge elements (18, 19), extending parallel to one another in the radial direction, of the stator parts (10, 17), and **in that** the at least one magnet sensor (27) is arranged axially off centre between the edge elements (18, 19) .

10. Device (1) according to one of Claims 7 to 9,
**characterized in that**
a screen (51) for magnetic fields is arranged axially between the permanent magnet (49), on the one hand, and at least one stator part (10, 17) of the stator (11), on the other hand.

11. Device (1) according to one of Claims 7 to 10,
**characterized in that**
the rotor (15) with its toothed structure (16) is integrally injection-moulded onto a mounting element (2) on which the stator (11) is arranged.

## Revendications

1. Arrangement (1) pour un véhicule automobile, comprenant un dispositif capteur de couple destiné à détecter un couple appliqué à un arbre de direction du véhicule automobile, le dispositif capteur de couple possédant un stator magnétique (11) qui est configuré pour conduire le flux magnétique depuis un aimant vers au moins un conducteur de flux (32, 33) et ainsi vers au moins un capteur magnétique (27) du dispositif capteur de couple,
l'au moins un capteur magnétique (27) étant disposé au niveau d'une carte à circuit imprimé (28) de l'arrangement (1), l'au moins un conducteur de flux (32, 33) possédant une patte (44) qui est disposée dans la direction axiale en chevauchement mutuel avec le capteur magnétique (27), et l'arrangement (1) possédant deux conducteurs de flux (32, 33) ayant chacun au moins une patte (44), lesquels sont disposés sur des côtés mutuellement opposés de la carte à circuit imprimé (28), les pattes (44) respectives étant disposées notamment dans la direction axiale en chevauchement mutuel avec le capteur magnétique (27),
la carte à circuit imprimé (28) possédant un évidement (50) pour la patte (44) de l'un des conducteurs de flux (32, 33), formé sous le capteur magnétique (27), la patte (44) du premier conducteur de flux (32) s'étendant axialement à l'intérieur de l'évidement (50) formé sous le capteur magnétique (27) afin de garantir un transfert fiable du flux magnétique,
**caractérisé en ce que**
l'au moins un capteur magnétique (27) est réalisé sous forme d'un composant monté en surface et étant soudé au niveau d'au moins deux portions de bord opposées de l'évidement (50) formé sous le capteur magnétique (27), directement sur un côté de la carte à circuit imprimé (28) par deux surfaces de raccordement soudables disposées sur deux côtés opposés du capteur magnétique.

2. Arrangement (1) selon la revendication 1,
**caractérisé en ce que**
l'au moins un conducteur de flux (32, 33) possède une région de réception (42) en forme de plaque, disposée en chevauchement axial mutuel avec le stator (11), destinée à recevoir le flux magnétique du stator (11), et **en ce que** la patte (44) qui s'étend parallèlement à la région de réception (42) et disposée de manière décalée dans la direction axiale par rapport à la région de réception (42) .

3. Arrangement (1) selon l'une des revendications précédentes,
**caractérisé en ce que**
le dispositif capteur de couple possède deux capteurs magnétiques (27a, 27b) réalisés sous la forme de composants montés en surface, respectivement pour détecter le flux magnétique, et **en ce que** l'au moins un conducteur de flux (32, 33), possède deux pattes (44), en particulier disposées dans un plan commun radial, qui sont respectivement disposées en chevauchement mutuel avec l'un des capteurs magnétiques (27a, 27b).

4. Arrangement (1) selon l'une des revendications précédentes,
**caractérisé en ce**
**qu'**au moins un capteur magnétique (27) du dispositif capteur de couple, réalisé sous la forme de composant monté en surface, comporte deux éléments capteur respectivement pour détecter le flux magnétique, qui sont intégrés dans le composant monté en surface.

5. Arrangement (1) selon l'une des revendications précédentes,
**caractérisé en ce que**
le stator (11) possède deux parties de stator (10, 17) disposées espacées dans la direction axiale et le capteur magnétique (27), notamment avec la carte à circuit imprimé (28), est disposé axialement entre les parties de stator (10, 17) .

6. Arrangement (1) selon la revendication 5,
**caractérisé en ce que**
l'au moins un capteur magnétique (27) est disposé axialement au centre entre les deux parties de stator (10, 17) .

7. Arrangement (1) selon l'une des revendications précédentes,
**caractérisé en ce que**
l'arrangement (1) possède en outre un dispositif capteur d'angle de direction destiné à détecter un angle de direction de l'arbre de direction, lequel possède un rotor (15) ayant une structure dentée (16) et au moins une roue dentée (38, 39, 40) avec un aimant permanent (49), laquelle peut être amenée en prise avec la structure dentée (16) du rotor (15) et au moyen de laquelle un mouvement de rotation du rotor (15) peut être converti en un mouvement de rotation de l'aimant permanent (49), le dispositif capteur d'angle de direction possédant un détecteur de champ magnétique (29, 30) destiné à détecter le mouvement de rotation, lequel est disposé sur la carte à circuit imprimé (28).

8. Arrangement (1) selon la revendication 5 ou 6 et la revendication 7,
**caractérisé en ce que**
l'aimant permanent (49) est disposé, dans la direction axiale, de manière excentrée entre des éléments de bord de forme annulaire (18, 19) respectifs des parties de stator (10, 17), lesquels s'étendent dans la direction radiale parallèlement les uns aux autres.

9. Arrangement (1) selon les revendications 5 et 7,
**caractérisé en ce que**
l'aimant permanent (49) est disposé dans la direction axiale centralement entre des éléments de bord de forme annulaire (18, 19) respectifs des parties de stator (10, 17), lesquels s'étendent dans la direction radiale parallèlement les uns aux autres, et **en ce que** l'au moins un capteur magnétique (27) est disposé axialement de manière excentrée entre les éléments de bord (18, 19).

10. Arrangement (1) selon l'une des revendications 7 à 9,
**caractérisé en ce**
**qu'**un blindage (51) pour des champs magnétiques est disposé axialement entre l'aimant permanent (49) d'une part et au moins une partie de stator (10, 17) du stator (11) d'autre part.

11. Arrangement (1) selon l'une des revendications 7 à 10,
**caractérisé en ce que**
le rotor (15) avec sa structure dentée (16) est surmoulé sur un élément de maintien (2) au niveau duquel est disposé le stator (11).
